# Europäisches Patentamt

# European Patent Office

# Office européen des brevets

(19)

(11) Publication number: **0 080 892**
**B1**

(12) **EUROPEAN PATENT SPECIFICATION**

(45) Date of publication of patent specification: **04.03.87**

(51) Int. Cl.⁴: **B 60 N 1/00**

(21) Application number: **82306352.4**

(22) Date of filing: **30.11.82**

(54) **Low profile resilient suspension assembly for a vehicle seat.**

(30) Priority: **01.12.81 US 326300**

(43) Date of publication of application:
**08.06.83 Bulletin 83/23**

(45) Publication of the grant of the patent:
**04.03.87 Bulletin 87/10**

(84) Designated Contracting States:
**DE FR GB IT SE**

(56) References cited:
**DE-A-2 625 508**
**GB-A-1 230 734**
**GB-A-1 491 291**
**GB-A-1 521 316**

(73) Proprietor: **UOP Inc.**
**10 UOP Plaza Algonquin & Mt. Prospect Roads**
**Des Plaines Illinois 60016 (US)**
(84) **IT**

(73) Proprietor: **BOSTROM SEATING, INC.**
**3326 East Layton Avenue**
**Cudahy Wisconsin 53110 (US)**
(84) **DE FR GB SE**

(72) Inventor: **Moorhouse, David**
**Inglenook Farthingstone Towcester**
**Northamptonshire (GB)**
Inventor: **Marshall, David Eric**
**80 Johns Road**
**Bugbrooke Northamptonshire (GB)**

(74) Representative: **Knott, Stephen Gilbert et al**
**MATHISEN, MACARA & CO. The Coach House**
**6-8 Swakeleys Road**
**Ickenham Uxbridge Middlesex UB10 8BZ (GB)**

Courier Press, Leamington Spa, England.

## Description

This invention relates to a resilient seat suspension assembly for a vehicle seat, and in particular to a suspension assembly of the type which utilises horizontally mounted tension spring means to provide a seat suspension assembly having a relatively low profile.

It is known from GB—A—1491291 to provide a resilient suspension assembly for a vehicle seat comprising a base support, a vertically movable upper support, a linkage mechanism comprising at least one linkage arm connected between the base support and the upper support for guiding and permitting generally vertical movement of the upper support relative to the base support, a support arm pivotally connected to one of said supports, a spring movably mounted at one end thereof on said one support and acting at its opposite end on said support arm to impart torque thereto, said support arm having a first coupling member at its outer end which engages a second coupling member, one coupling member being a cam surface and the other coupling member being a roller in permanent engagement with the cam surface, said support arm and first coupling member being connected through a ride height-adjustment mechanism to the other said support to apply the force of the spring thereto in a sense to counterbalance the weight of the seat and its occupant, said height-adjustment mechanism comprising two height adjustment members mounted for pivotal movement relative to one another, one member having notches thereon and the other height-adjustment member having a sprung detent engageable with said notches to lock the members in different relative positions each corresponding to a different static height of the seat.

In this prior art, said notched member was rigidly secured to the linkage arm and the support arm was pivoted to the linkage arm and locked thereto by the detent mechanism at any one of a limited number of angular positions relative to the linkage arm corresponding to different seat height adjustments. The support arm when locked was obliged to move in unison with the linkage arm. Since the maximum practical angle between the linkage arm and the base is about 45° and, in the known construction, this angle must be shared between angular movement of the linkage arm during suspension movement and angular movement of the support arm during ride-height adjustment, these angular movements are limited so that at the maximum seat height adjustment the maximum vertical displacement of the seat is represented by only about 25° of angular movement of the linkage arm.

This limitation has been avoided by the present invention in that one height-adjustment member is rigidly fixed to said other support and the other height-adjustment member carries said second coupling member thereon and is movable only when varying the ride height of the seat. In other words, by separating the height adjustment mechanism from the linkage arm, the linkage arm can pivot through a maximum of approximately 45° for any setting of the height adjustment mechanism. Moreover, by separating the support arm from the linkage arm, the support arm can move through a maximum of about 65° during a full stroke of the suspension mechanism. Since in the present invention the cam follower can be a roller of relatively small diameter and the cam on the support arm can be of relatively long profile, (as distinct from the large diameter roller and short cam profile of the prior art), a wide range of load/vertical deflection relationships can be established to suit any particular requirement.

The invention will now be further described, by way of example, with reference to the accompanying drawings, in which:—

Figure 1 is a perspective view, partially broken away, and partially in section, showing one embodiment of suspension assembly in accordance with the invention;

Figure 2 is a side sectional view showing the suspension assembly of Figure 1 at the top of its "ride" stroke and in its uppermost position of height adjustment; and

Figure 3 is a side sectional view showing the suspension assembly of Figure 1 at the bottom of its "ride" stroke and in its lowest position of height adjustment.

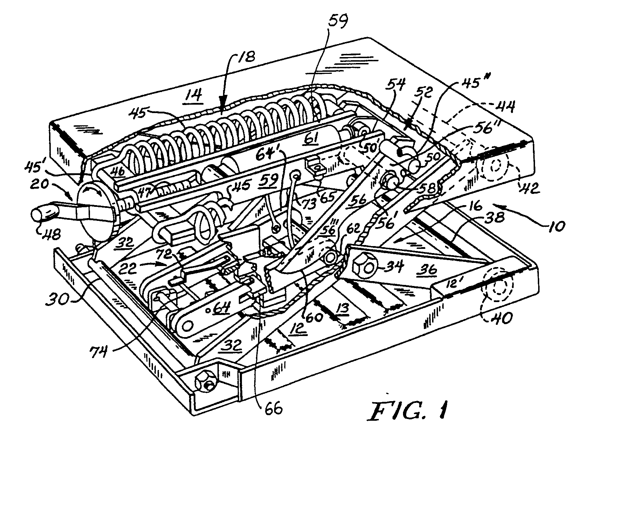

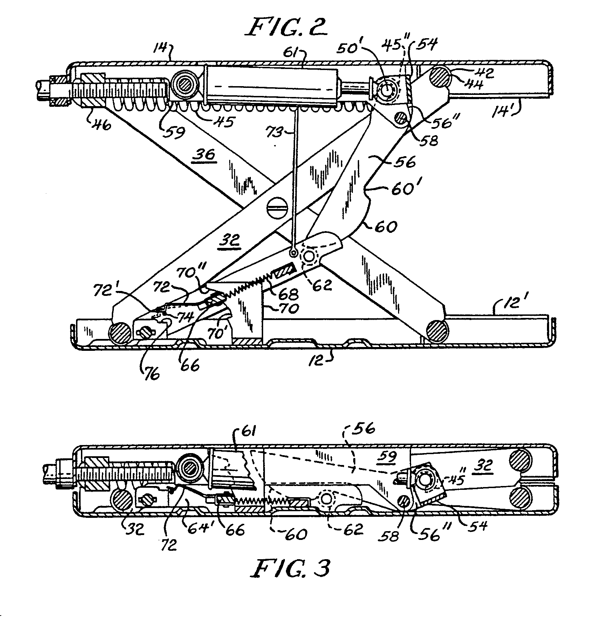

Referring to Figure 1, the improved seat suspension assembly is indicated generally at 10 and can be seen to comprise a base support 12 which may include integral strengthening ribs 13, and which is adapted to be fastened to the floor of a vehicle. An upper support 14 is adapted to be attached to a seat member (not shown) and is vertically movable relative to the base support 12 in a generally parallel mode by a parallel linkage indicated generally at 16. The upper support 14 is resiliently supported for movement in a predetermined ride zone range relative to the base support 12 by a spring suspension 18. The tension of the spring suspension 18 is varied to accommodate seat occupants of differing weights by a weight adjustment mechanism indicated generally at 20. A height adjustment mechanism, indicated generally at 22, determines the bottom point of the movement range or "ride zone" of the upper support 14 relative to the base support 12. To provide a full "ride zone" range of about 100 mm, irrespective of the position of the height adjustment mechanism 22, the parallel linkage 16 must accommodate a total vertical movement equal to the sum of the "ride zone" range and the height adjustment range, as illustrated in Figure 2. For a height adjustment range of 60 mm, this movement would thus be about 160 mm. The parallel linkage 16 also should be completely collapsible as illustrated in Figure 3, so that the upper support 14 can be brought down to touch the base support 12. In the embodiment shown, the collapsed height is only about 55 mm.

Having generally described the structure of the seat suspension assembly 10, a detailed description follows.

The base support 12 has a pivot shaft 30 mounted adjacent to its forward end for supporting the lower forward ends of a first pair of scissors links 32. The links 32 are each pivotally mounted at their centre by bolts 34 to a second pair of scissors links 36 which are pivotally mounted to the upper support 14 at their upper, forward ends. The lower ends of the scissors links 36 are joined together by a shaft 38 which carries a pair of rollers 40 at its ends. The rollers 40 are guided for fore and aft movement between the bottom of the base support 12 and a bent-over flange portion 12'. Similarly, rollers 42, which are on the ends of a shaft 44 connecting the upper ends of the scissors links 32, are guided for fore and aft movement between the upper support 14 and a bent-over flange portion 14'. The length of the scissors links 32, 36 and the lengths of the travel paths of the rollers 40, 42 are selected to provide sufficient vertical movement of the upper support 14 to accommodate the complete desired ride zone range when the height adjustment mechanism 22 is at its uppermost position.

The spring suspension 18 basically comprises a pair of tension springs 45 which have their forward ends 45' wrapped around a tensioning bar 46 which is internally threaded and engaged with an adjusting screw 47 for preloading the springs 45 when a handle 48 is turned to move the tensioning bar 46 forwardly. The screw 47 is mounted for rotation in an aperture (not shown) in the front wall of the upper support 14 but is prevented from moving axially relative thereto. Since the tensioning bar 46 and the screw 47 do not move during operation of the spring suspension, it is obvious that an indicator means (not shown) showing the relative movement of the tensioning bar 46 relative to the front wall of the upper support 14 can be calibrated so that the tension springs 45 can be accurately preloaded to any desired load. Thus, an occupant of the seat can adjust the preload to any desired value when he is either in or out of the seat. When the operator adjusts the spring preload to accommodate his correct weight, the tension springs 45 will extend sufficiently when he sits on the seat to position the spring suspension 18 in the centre of its "ride zone". The rearward ends 45'' of the tension springs 45 are wrapped around a pair of studs 50 welded onto a cam lever bracket and arm assembly 52. A cross-bar 54 of the assembly 52 is fixed to a pair of bellcranks 56 which form a support arm pivoted to the upper support 14. The bellcranks 56 each have apertures 56' which receive a pivot shaft 58 carried by elongate support bars 59 which are fixed to the underside of the upper support 14. The shorter portions 56'' of the bellcranks 56, located between the pivot shaft 58 and the studs 50, comprise the short arms of the bellcranks 56 while the longer portions 56''' terminate in cam 60 which form a first coupling member of a coupling device which connects the bellcranks 56 to the base support 12. Each cam 60 is adapted to be engaged by a cam follower 62 (preferably a roller as shown) which forms the second coupling member of the coupling device. The cam followers 62 would be fixedly mounted on the base support 12 if height adjustment of the linkage 16 were not required. However, since height adjustment is to be provided, the cam followers 62 are mounted at the vertically movable ends of a pair of pivot arms 64 forming one member of the height adjustment mechanism 22. It will be readily obvious that vertical movement of the suspension assembly 10, as permitted by the parallel linkage 16, will cause each cam 60 to ride along its respective cam follower 62. This movement will cause the long arms 56''' of the bellcranks 56 to pivot about the shaft 58 and will simultaneously cause the short arms 56'' of the bellcranks 56 to pivot about the shaft 58. When a weight is applied to the upper support 14, such as by an occupant sitting down, the parallel linkage 16 will be compressed downwardly. This movement will cause the bellcranks 56 to move clockwise as seen in Figure 1 so as to increase the tension in the springs 45. If the surface of cams 60 were straight, the rate of extension of the springs 45 would become less and less as the parallel linkage 16 collapsed, since the horizontal component of the movement of the studs 50 decreases as the short arms 56'' become more horizontal. Such a situation would result in a poor ride. By shaping the cams 60 to cause equal increments of spring expansion for equal increments of vertical movement of the upper support 14, the spring suspension 18 will provide excellent vibration isolation for any weight of occupant throughout the entire range of the "ride zone". The isolation is enhanced by the provision of a damper 61 mounted at its forward end between the support bars 59 and at its rearward end connected to a stud 50' which is substantially coaxial with the studs 50 and is secured to the cross-bar 54. Thus, the extension of the tension springs 45 and the damper 61 will be substantially identical as the suspension 18 moves within its entire range.

By providing a predetermined convex shape to each cam 60, the effective spring rate of the suspension can be made to remain constant throughout the ride zone. The required shape can be readily determined on a computer. It can also be obtained graphically, for example, by assuming that nine equal increments of extension of the springs 45 correspond to ten discrete angular positions of the studs 50 on the short arms 56'' of the bellcranks 56 about the pivot shaft 58 carried by the upper support 14, as the seat is compressed in nine equal increments between its uppermost and lowermost positions in its ride zone. Obviously, the long arms 56''' must move to the same ten discrete angular positions as the short arms 56'' which are integral with them. It is thus a simple matter to shape each cam surface so that a portion of it will be in contact with the cam follower 62 as the seat is incrementally compressed, the springs 45 incrementally expanded, and the bellcranks 56 angularly rotated into each of the ten aforementioned positions. It can be seen in the drawings that each cam surface changes direction rather abruptly at its inner end portion 60'. This is the portion which engages the cam follower 62 at the bottom end of the ride stroke, as illustrated in Figure 3. The reason for the abrupt change is that the point of tangential contact between the rearward ends 45'' of the springs 45 and the stud 50 moves more horizontally than vertically for each increment of seat compression and spring expansion when the seat is in the upper portion of the ride zone, as illustrated in Figure 2. Conversely, as the seat is compressed toward the bottom of the ride zone as illustrated in Figure 3, the aforementioned point of contact must move much further vertically per increment of seat compression in order to cause the amount of horizontal movement necessary to produce said increment of spring expansion.

The shape of the cam surfaces can be chosen to give a straight line spring characteristic or one in which the springs 45 offer greater resistance to bottoming of the suspension assembly at the bottom end of the ride stroke.

As previously discussed, the height adjustment mechanism 22 determines the bottom end of the "ride zone" of the suspension. Specifically, an elastomeric pad 65 carried by each support bar 59 will engage the outer upper end 64' of the respective pivot arm 64. If no height adjustment is required, or if it is preferred to provide a separate mechanism for height adjustment (not shown) either between the uppper support 14 and the seat, or between the base support 12 and the vehicle floor, the cam followers 62 could be fixedly mounted on the base support 12 and the pads 65 could be located so as to contact the base support 12. However, as shown, the cam followers 62 are mounted on the ends of the pivot arms 64 so that each can be selectively positioned in three positions. A slidable pawl 66 carried by the pivot arms 64 is engaged by a return spring 68 (see Figure 2) and forms a sprung detent which is biassed into contact with one of three steps 70' on a ratchet member 70. Member 70 is fixed to the base and support 12 and forms a second member of the height-adjustment mechanism. Actuation of the height adjustment mechanism 22 can be accomplished by providing flexible connectors 73 of a material such as polyropylene between each pivot arm 64 and the respective support bar 59. When the upper support 14 is lifted to the top of its stroke, as shown in Figure 3, continued lifting with the connectors 73 taut, will lift the pivot arms 64 and cause the pawl 66 to be moved upwardly and outwardly along an angled ramp surface extension 70'' against the force of the return spring 68. An angled spring finger 72 will move outwardly with the pawl 66 as the latter rides along the ramp surface extension 70'' and when the finger 72 reaches the dotted line position shown in Figure 2, it will snap down over a rod 74 and hold the pawl 66 away from the ratchet steps 70'. At this point, a release of the lifting force being applied to the seat, will permit the pawl 66 and the pivot arms 64 to drop to their lowest position (shown in Figure 3). Shortly before this lowest position is reached, the end portion 72' of the spring finger 72 will engage a stop surface 76. Continued downward movement of the pivot arms 64 will then release the spring finger 72 from engagement with the rod 74 and permit the pawl 66 to snap into engagement with the lowest of the ratchet steps 70'.

When the seat is to be occupied by one operator after having been adjusted for another, it would be preferable for the operator to initially turn the handle 48 so as to rotate the adjusting bar 46 to either increase or decrease the tension in the springs 45, whichever is necessary to provide the proper preload to cause the operator to be in the centre of the "ride zone" when seated. The operator then decides if he would like to be positioned higher or lower. If higher, he simply lifts the upper support 14 to move the pawl 66 to a higher ratchet step 70'. If lower, he lifts the upper support 14 still further so as to cause the pawl 66 to be locked out of contact with the ratchet steps 70' by the spring finger 72 and the retaining rod 74, and can then reset the pawl 66 in the lowest of the ratchet steps 70'.

Although two bellcranks 56 and two springs 45 are preferred it will be appreciated that alternative designs using just one of each of these components are possible and are within the scope of the following claims.

### Claims

1. A resilient suspension assembly for a vehicle seat comprising a base support (12), a vertically movable upper support (14), a linkage arm (32) connected between the base support and the upper support for guiding and permitting generally vertical movement of the upper support relative to the base support, a support arm (56) pivotally connected to one (14) of said supports, a spring (45) movably mounted at one end thereof on said one support (14) and acting at its opposite end on said support arm (56) to impart torque thereto, said support arm having a first coupling member (60) at its outer end which engages a second coupling member (62), one coupling member (60) being a cam surface and the other coupling member (62) being a roller in permanent engagement with the cam surface, said support arm (56) and first coupling member (60) being connected through a ride-height-adjustment mechanism (22) to the other said support (12) to apply the force of the spring thereto in a sense to counterbalance the weight of the seat and its occupant, said height-adjustment mechanism comprising two height adjustment members (64, 70) mounted for pivotal movement relative to one another, one member (70) having notches (70') thereon and the other height-adjustment member (64) having a sprung detent (66) engageable with said notches to lock the members in different relative positions each corresponding to a different static height of the seat, characterised in that one height-adjustment member (70) is rigidly fixed to said other support (12) and the other height-adjustment member (64) carries said second coupling member (62) thereon and is movable to raise or lower said second coupling member only when varying the ride height of the seat.

2. A resilient suspension assembly according to claim 1 characterised in that said other height-adjustment member is an arm (64) pivoted at one end thereof to said other support (12) and carrying said second coupling member (62) at its opposite end.

3. A resilient suspension assembly according to claim 1 or claim 2 characterised in that the roller (62) has a diameter which is small relative to the length of the surface of the cam (60).

### Patentansprüche

1. Eine elastische Aufhängungsanordnung für einen Fahrzeugsitz mit einer unteren Abstützung (12), einer vertikal bewegbaren oberen Abstützung (14), einem die untere Abstützung und die obere Abstützung verbindenden Verbindungsarms (32) zum Führen und Ermöglichen einer allgemein vertikalen Bewegung der oberen Abstützung relativ zur unteren Abstützung, einem schwenkbar mit einer (14) der genannten Abstützungen verbundenen Stützarm (56), und einer an ihrem einen Ende beweglich an der genannten einen Abstützung (14) angebrachten und an ihrem entgegengesetzten Ende auf den genannten Stützarm (56) zum Aufbringen einer Drehkraft auf denselben einwirkenden Feder (45), wobei der genannte Stützarm an seinem äußeren Ende einen an einen zweiten Kupplungsteil (62) angreifenden ersten Kupplungsteil (60) aufweist, ein Kupplungsteil (60) als eine Steuerfläche und der andere Kupplungsteil (62) als eine mit der Steuerfläche im permanenten Eingriff stehende Rolle ausgebildet ist, der genannte Stützarm (56) und der erste Kupplungsteil (60) durch eine Fahrhöhenverstell-Einrichtung (22) mit der anderen genannten Abstützung (12) verbunden sind, um auf dieses die Kraft der Feder gewissermaßen zum Ausgleichen des Gewichts des Sitzes und seines Benutzers aufzubringen, und die genannte Höhenverstell-Einrichtung zwei zur Schwenkbewegung relativ zueinander angebrachte Höhenverstellglieder (64, 70) umfaßt, deren eines Glied (70) Zähne (70') aufweist und deren anderes Höhenverstellglied (64) mit einer gefederten Rastklinke (66) versehen ist, die mit den genannten Zähnen in Eingriff bringbar ist, um die Glieder in verschiedenen Relativpositionen, deren jede einer anderen statischen Höhe des Sitzes entspricht, zu arretieren, dadurch gekennzeichnet, daß ein Höhenverstellglied (70) starr an der genannten anderen Abstützung (12) befestigt ist und das andere Höhenverstellglied (64) den genannten zweiten Kupplungsteil (62) trägt und bewegbar ist, um den genannten zweiten Kupplungsteil lediglich dann anzuheben oder abzusenken, wenn die Fahrhöhe des Sitzes verstellt wird.

2. Eine elastische Aufhängungsanordnung nach Anspruch 1, dadurch gekennzeichnet, daß das genannte andere Höhenverstellglied als ein Arm (64) ausgebildet ist, der an seinem einen Ende schwenkbar an der genannten anderen Abstützung (12) gelagert ist und an seinem gegenüberliegenden Ende den genannten zweiten Kupplungsteil (62) trägt.

3. Eine elastische Aufhängungsanordnung nach Anspruch 1, oder Anspruch 2, dadurch gekennzeichnet, daß die Rolle (62) einen Durchmesser aufweist, der relativ zur Länge der Fläche des Steuerteils (60) klein ist.

### Revendications

1. Ensemble formant suspension élastique pour un siège de véhicule comportant un support de base (12), un support supérieur (14) mobile verticalement, un bras formant biellette (32) relié entre le support de base et le support supérieur pour guider, et de façon générale permettre, le mouvement vertical du support supérieur par rapport au support de base, un bras support (56) relié, avec possibilité de pivotement, à l'un (14) desdits supports, un ressort (45) monté, avec possibilité de déplacement, par l'une de ses extrémités, sur ledit support mentionné (14) et agissant, par son extrémité opposée sur ledit bras support (56) pour lui appliquer un couple; ledit bras support comportant, à son extrémité extérieure, un premier élément de couplage (60) qui vient au contact d'un second élément de couplage (62), l'un des éléments de couplage (60) étant la surface d'une came et l'autre élément de couplage (62) étant un galet en contact permanent avec la surface de la came; ledit bras support (56) et ledit premier élément de couplage (60) étant reliés, par l'intermédiaire d'un mécanisme (22) de réglage en hauteur du point bas du jeu de la suspension, à l'autre desdits supports (12) pour lui appliquer la force du ressort dans le but de contrebalancer le poids du siège et de son occupant; ledit mécanisme de réglage en hauteur comportant deux éléments de réglage en hauteur (64, 70) montés de façon à pouvoir pivoter l'un par rapport à l'autre, l'un des éléments (70) présentant des encoches (70') et l'autre élément de réglage en hauteur (64) présentant un cliquet, solicité par un ressort, (66), qui peut venir se loger dans lesdites encoches pour verrouiller les éléments dans différentes positions relatives, correspondant chacune à une hauteur statique différente du siège, ensemble caractérisé en ce que l'un des éléments de réglage en hauteur (70) est rigidement fixé au dit autre support (12); et en ce que l'autre élément de réglage en hauteur (64) porte ledit second élément de couplage (62) et ne peut se déplacer pour faire monter ou faire descendre ledit second élément de couplage que pour modifier la hauteur du point bas du jeu de la suspension du siège.

2. Ensemble formant suspension élastique selon la revendication 1, caractérisé en ce que ledit autre élément de réglage en hauteur est un bras (64) qui, à l'une de ses extrémités, pivote sur ledit autre support (12) et qui, à son extrémité opposée, porte ledit second élément de couplage (62).

3. Ensemble formant suspension élastique selon la revendication 1 et la revendication 2, caractérisé en ce que le galet (62) a un diamètre qui est petit par rapport à la longueur de la surface de la came (60).

*FIG. 1*

FIG. 2

FIG. 3